# EUROPEAN PATENT SPECIFICATION

(11) **EP 4 268 969 B1**
(45) Date of publication and mention of the grant of the patent: **25.11.2026**
(21) Application number: 22170205.3
(22) Date of filing: 27.04.2022
(51) Int. Cl.: B05B 1/30

(54) **ATOMIZING NOZZLE ARRANGEMENT**
ZERSTÄUBUNGSDÜSENANORDNUNG
AGENCEMENT DE BUSE D'ATOMISATION

(43) Date of publication of application: 01.11.2023
(73) Proprietor: Danfoss A/S, 6430 Nordborg (DK)
(72) Inventor: Kristensen, Steen Gaardsted, 6430 Nordborg (DK); Gregersen, Tomas, 6430 Nordborg (DK)
(74) Representative: Keil & Schaafhausen Patentanwälte PartGmbB

(56) References cited:
- EP-A1- 2 275 726
- CN-A- 110 761 973
- DE-A1- 10 104 616
- DE-B3- 102007 011 016
- US-A- 5 002 230
- US-A1- 2004 217 203

## Description

The present invention relates to an atomizing nozzle arrangement comprising a housing having an inlet, a valve seat, a valve element interacting with the valve seat, restoring means acting on the valve element, and an orifice, wherein the valve element cooperates with a guidance element which is arranged in a bore of the housing.

Such an atomizing nozzle arrangement is known, for example, from EP 1 832 789 A2.

Such a nozzle arrangement is used, for example, to create a fine atomized spray of a liquid. Such a nozzle arrangement can be used, for example, in relation to humidification, dust suppression, pest control, disinfection, cooling and other purposes.

The valve element is pressed against the valve seat by means of the restoring means. The valve element is moved away from the valve seat when the liquid to be atomized is supplied to the inlet with a defined or given pressure. The pressure is sufficient to atomize the liquid. When the output of the atomized liquid is to be stopped, the pressure at the inlet is lowered. The restoring means moves back the valve element to the valve seat to close the inlet. The valve should close perfectly, when the inlet pressure is fully removed or drops below a lower limit in order to avoid dripping.

In such a nozzle arrangement there is sometimes a noise issue which is disturbing.

Further nozzle and valve arrangements are known from US 5,002,230 A, US 2004/0217203 A1, EP 2 275 726 A1, DE 10 2007 011 016 B3, DE 101 04 616 A1 und CN 110 761 973 A.

The object underlying the invention is to keep noise low.

This object is solved with an atomizing nozzle as described at the outset with the features according to claim 1. The combination of the guidance element and the valve element comprises a surface having a smooth transition in a direction away from the valve seat.

The guidance element aligns the valve element with respect to the valve seat, so that the valve can fully be closed when the pressure at the inlet is decreased and the valve element contacts the valve seat. When the valve element is moved away from the valve seat and the valve is open, the smooth transition of the surface of the combination of valve element and guidance element allows a well-defined non-turbular flow of the liquid to be atomized along the valve element. Turbulences are avoided and thus the risk of vibrations of the guidance element is dramatically reduced.

In an embodiment of the invention the guidance element is surrounded by a gap, the gap extending between an inner wall of the bore and the guidance element and having a flow area. In this embodiment the guidance element does not slide along the wall but has in all operating conditions a certain distance to the inner wall of the bore. Thus, there is always a liquid layer between the guidance element and the inner wall of the bore.

In an embodiment of the invention the flow area between the guidance element and the inner wall of the bore is largest at the end of the guidance element adjacent the valve element. Thus, the liquid supplied to the inlet of the nozzle arrangement is accelerated when it passes the guidance element. This contributes to minimize the risk of a noise development.

In an embodiment of the invention the flow area is smallest at a position which is located in a half of the guidance element remote from the valve element. This can be realized, for example, in that the largest cross section of the guidance element is located in a half of the guidance element which is remote from the valve element.

According to the invention the guidance element comprises a cross section increasing in a direction away from the valve element. In other words, when moving along the guidance element from the valve element to the opposite side of the guidance element, the cross section only increases or remains constant, but never decreases. The increase of the cross section is smooth, i.e. without abrupt steps or edges.

In an embodiment of the invention the valve element and the guidance element contact each other releasably. In other words, it is not necessary that the valve element is fixed to the guidance element.

In an embodiment of the invention the guidance element has a cross section at the end adjacent the valve element which is smaller than or equal to a corresponding cross section of the valve element. This means that the transition from the valve element to the guidance element can be realized without any steps between valve element and guidance element.

In an embodiment of the invention the valve element comprises at least on a side facing the valve seat a symmetrically curved surface. This symmetrically curved surface can be, for example, a spherical surface, which is provided at least in an area facing the valve seat. The symmetry of the valve element facilitates the tight closure of the valve formed by the valve element and the valve seat.

In an embodiment of the invention the valve element is made of an elastically deformable material. Such a material can compensate for slight misalignments of the valve element and the valve seat.

In an embodiment of the invention the valve seat comprises a conical or curved form. In particular in combination with a symmetrically curved surface of the valve element, such a form of the valve seat allows for a tightly closure of the valve.

In an embodiment of the invention the housing comprises a first housing part and a second housing part, wherein the second housing part comprises an outer thread in engagement with an inner thread in the first housing part, wherein the second housing part comprises an inlet channel connected to the inlet and the valve seat is formed at an inner end of the inlet channel. Thus, the valve seat can be produced in a simple way. It is basically only necessary to form the inlet channel.

In an embodiment a cone element is arranged in the housing between the guidance element and the orifice, wherein the restoring means are arranged between the cone element and the guidance element. The cone element is used to guide the liquid from a radially outer part of the flow path to the orifice which is arranged centrically. The cone element can also be used to set the liquid which should be atomized in a rotational motion.

In an embodiment of the invention the restoring means are arranged in a recess in the cone element and/or in a recess in the guidance element. The restoring means can be, for example, in form of a spring or in form of an element of an elastically deformable material. The length of the restoring element is at least partly accommodated in the cone element and/or the guidance element, so that the length of the nozzle arrangement in a direction of movement of the valve element can be kept small.

In an embodiment of the invention the restoring means are in form of a spring of a metal or plastic material or in form of an elastomer body. The restoring means can be in form of a compressible elelement like a spring, in particular a screw spring, or it can be in form of a compressible elastomer, like a rubber ball.

A preferred embodiment of the invention will now be described with reference to the drawing, in which:
- Fig. 1: shows a sectional view of an atomizing nozzle arrangement,
- Fig. 2: shows a view similar to Fig. 1, however, with an open valve,
- Fig. 3: shows an exploded view of the atomizing nozzle arrangement.

In the Figures the same elements are denoted with the same reference numerals.

A nozzle arrangement 1 comprises a housing comprising a first housing part 2 and a second housing part 3. The second housing part 3 comprises an outer thread 4 which is screwed into an inner thread 5 in the first housing part 2.

The nozzle arrangement 1 comprises furthermore a valve seat 6 and a valve element 7 interacting with the valve seat 6. Furthermore, restoring means 8 are provided. In the present embodiment the restoring means 8 are in form of a spring. However, the restoring means 8 can be of another form, for example be an elastically deformable element.

The restoring means 8 act on the valve element 7. Unless other forces are present, the restoring means 8 force or push the valve element 7 against the valve seat 6 and holds the valve element 7 against the valve seat 6.

The nozzle arrangement 1 comprises an orifice 9 which is arranged in an orifice disk 10 which is inserted into the first housing part 2. The orifice 9 can also be termed "nozzle".

The valve element 7 is made of an elastically deformable material. Such a material can be, for example, rubber or a polymeric material. The use of an elastically deformable material increases the tightness of the valve formed by the valve seat 6 and the valve element 7. The valve seat 6 can be of conical form or it can have a curved cross section.

The valve element 7 comprises a symmetrically curved surface 11 at least in an area facing the valve seat 6. Such a symmetrically curved surface can be a spherical surface. In a preferred embodiment of the invention, the valve element 7 has only a spherical surface, i.e. is in form of a ball.

The valve element 7 is in contact with a guidance element 12. The guidance element 12 comprises a receptacle 13 the form of which is adapted to the form of the valve element. It is not necessary that the valve element 7 is fixed to the guidance element 12. The receptacle 13 has a form of a bowl, so that the guidance element 12 holds the valve element in radial direction with respect to a longitudinal axis 14 of the nozzle arrangement 1.

A cone element 15 is mounted in the first housing part 2. The cone element 15 fits into the orifice disk 10. The restoring means 8 are arranged between the cone element 15 and the guidance element 12. Thus, the cone element 15 is pressed against the orifice disk 10 when the first housing part 2 and the second housing part 3 are screwed together.

The guidance element 12 comprises a recess 16 accommodating the restoring element 8. In a way not shown, a recess can also be formed in the cone element 15 or only in the cone element 15. The restoring means 8 act on the valve element 7 via the guidance element 12.

A sealing ring 17, for example in form of an O-ring, is fitted in a groove 18 on an outer face of the second housing part 3 and prevents external leakage from the nozzle arrangement 1 when the second housing part 3 is screwed into the first housing part 2.

The second housing part 3 comprises an inlet channel 19 the end of which forms the valve seat 6. The inlet channel 19 opens into a bore of the second housing part 3 in which the valve element 7 and the guidance element 12 are arranged. The bore can have, for example, a circular cross section. The bore has an inner wall 20.

A combination of the valve element 7 and the guidance element 12 comprises a surface having a smooth transition in a direction away from the valve seat 6. Edges or the like are avoided. A cross section of the guidance element 12 at the end of the guidance element 12 contacting the valve element 7 is smaller than a corresponding cross section of the valve element 7, so that a transition from the valve element 7 to the guidance element 12 can also be kept smooth.

A gap 21 is formed between the guidance element 12 and the inner wall 20 of the bore. This gap 21 surrounds completely the guidance element 12. This gap 21 forms a flow area for liquid flowing from the inlet channel 19 via the outer surface of the cone element 15 to the orifice 9.

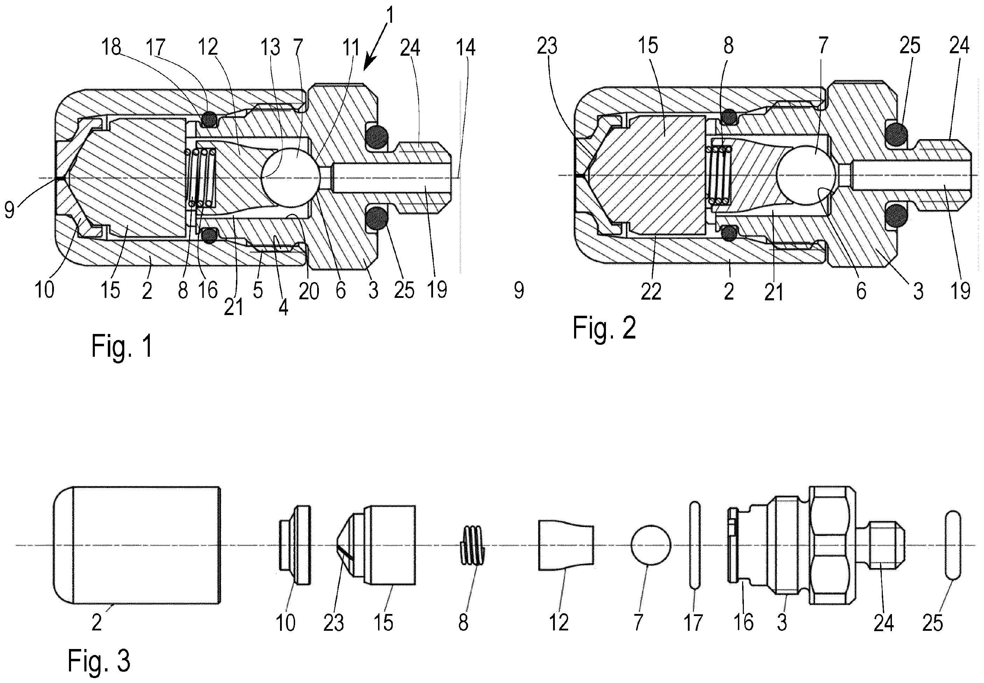

The flow area between the guidance element 12 and the inner wall 20 of the bore is largest at the end of the guidance element 12 adjacent the valve element 7. The flow area is smallest at a position which is located in a half of the guidance element 12 remote from the valve element 7. In the embodiment shown in Fig. 1 and 2 the flow area is smallest at the end of the guidance element 12 remote from the valve element 7.

The guidance element 12 comprises a cross section increasing in a direction away from the valve element. In other words, the cross section of the guidance element 12 increases in a direction away from the valve element 7 or remains constant in certain sections, however, it does not decrease.

The valve element 7 and the guidance element 12 are rotationally symmetrical.

Liquid to be atomized is fed into the atomizing nozzle arrangement 1 via the inlet channel 19. As long as the pressure of the liquid is small, the valve element 7 remains in contact with the valve seat 6.

When the pressure of the liquid in the inlet channel 19 is increased and produces a force which is larger than the force of the restoring means 8, the valve element 7 is lifted off the valve seat 6, as shown in Fig. 2. When the valve element 7 has been lifted off the valve seat 6 the area in which the pressure of the liquid in the inlet channel 19 acts increases suddenly, so that the valve element 7 is reliably held in a certain distance from the valve seat 6 and liquid can pass from the inlet channel 19 through the ring gap 21 to the orifice 9. The ring gap 21 has a decreasing flow area, so that the liquid is accelerated, however, keeping a well-defined non-turbular flow.

The liquid passes from the ring gap 21 to a further ring gap 22 provided between the cone element 15 and the first housing part 2. The cone element 15 has a guiding geometry 23 on a face contacting the orifice disk 10 to guide the liquid radially inwardly to the orifice 9. This guiding geometry 23 can also be used to move the liquid rotationally which is positive for the atomizing of the liquid.

The second housing part 3 comprises an outer thread 24 with which it can be screwed into a liquid supply system (not shown). Furthermore, the second housing part 3 comprises a sealing ring 25 sealing the atomizing nozzle arrangement 1 to the liquid supply arrangement.

When the pressure in the inlet channel 19 decreases and the force of the restoring means 8 becomes larger than the force onto the valve element 7 produced by the pressure in the inlet channel 19, the valve element 7 is moved back against the valve seat 6 under the action of the restoring element 8.

## Claims

1. Atomizing nozzle arrangement (1) comprising a housing (2, 3) having an inlet, a valve seat (6), a valve element (7) interacting with the valve seat (6), restoring means (8) acting on the valve element (7), and an orifice (9), wherein the valve element (7) cooperates with a guidance element (12) which is arranged in a bore of the housing (2, 3), wherein a combination of the guidance element (12) and the valve element (7) comprises a surface having a smooth transition in a direction away from the valve seat (6),
**characterized in that** the guidance element (12) comprises a cross section increasing in a direction away from the valve element (7).

2. Nozzle arrangement according to claim 1, **characterized in that** the guidance element (12) is surrounded by a gap (21), the gap (21) extending between an inner wall (20) of the bore and the guidance element (12) and having a flow area.

3. Nozzle arrangement according to claim 2, **characterized in that** the flow area between the guidance element (12) and the inner wall (20) of the bore is largest at the end of the guidance element (12) adjacent the valve element (7).

4. Nozzle arrangement according to claim 2 or 3, **characterized in that** the flow area is smallest at a position which is located in a halve of the guidance element (12) remote from the valve element (7).

5. Nozzle arrangement according to any of claims 1 to 4, **characterized in that** the valve element (7) and the guidance element (12) contact each other releasably.

6. Nozzle arrangement according to any of claims 1 to 5, **characterized in that** the guidance element (12) has a cross section at the end adjacent the valve element (7) which is smaller than or equal to a corresponding cross section of the valve element (7).

7. Nozzle arrangement according to any of claims 1 to 6, **characterized in that** the valve element (7) comprises at least on a side facing the valve seat (6) a symmetrically curved surface (11).

8. Nozzle arrangement according to claim 7, **characterized in that** that the valve element (7) comprises a spherical surface (11), at least in an area facing the valve seat (6).

9. Nozzle arrangement according to any of claims 1 to 8, **characterized in that** the valve element (7) is made of an elastically deformable material.

10. Nozzle arrangement according to claim 9, **characterized in that** the valve seat (6) comprises a conical or curved form.

11. Nozzle arrangement according to any of claims 1 to 10, **characterized in that** the housing (2, 3) comprises a first housing part (2) and a second housing part (3), wherein the second housing (3) part comprises an outer thread (4) in engagement with an inner thread (5) in the first housing part (2), wherein the second housing part (3) comprises an inlet channel (19) connected to the inlet and the valve seat (6) is formed at an inner end of the inlet channel (19).

12. Nozzle arrangement according to any of claims 1 to 11, **characterized in that** a cone element (15) is arranged in the housing (2, 3) between the guidance element (12) and the orifice (9), wherein the restoring means (8) are arranged between the cone element (15) and the guidance element (12).

13. Nozzle arrangement according to claim 12, **characterized in that** the restoring means (8) are arranged in a recess (16) in the guidance element (12) and/or in a recess in the cone element (15).

14. Nozzle arrangement according to any of claims 1 to 13, **characterized in that** the restoring means (8) are in form of a spring of a metal or plastic material or in form of an elastomer body.

## Patentansprüche

1. Düsenanordnung (1) zum Zerstäuben, umfassend ein Gehäuse (2, 3) aufweisend einen Einlass, einen Ventilsitz (6), ein mit dem Ventilsitz (6) zusammenwirkendes Ventilelement (7), auf das Ventilelement (7) einwirkende Rückstellmittel (8) und eine Öffnung (9), wobei das Ventilelement (7) mit einem Führungselement (12) zusammenwirkt, welches in einer Bohrung des Gehäuses (2, 3) angeordnet ist, wobei eine Kombination aus dem Führungselement (12) und dem Ventilelement (7) eine Oberfläche mit einem glatten Übergang in einer von dem Ventilsitz (6) wegführenden Richtung aufweist,
**dadurch gekennzeichnet, dass** das Führungselement (12) einen Querschnitt aufweist, welcher in einer von dem Ventilelement (7) wegführenden Richtung zunimmt.

2. Düsenanordnung nach Anspruch 1, **dadurch gekennzeichnet, dass** das Führungselement (12) von einem Spalt (21) umgeben ist, wobei sich der Spalt (21) zwischen einer Innenwand (20) der Bohrung und dem Führungselement (12) erstreckt und eine Strömungsfläche aufweist.

3. Düsenanordnung nach Anspruch 2, **dadurch gekennzeichnet, dass** die Strömungsfläche zwischen dem Führungselement (12) und der Innenwand (20) der Bohrung an dem dem Ventilelement (7) benachbarten Ende des Führungselements (12) am größten ist.

4. Düsenanordnung nach Anspruch 2 oder 3, **dadurch gekennzeichnet, dass** die Strömungsfläche an einer Stelle, die sich in der vom Ventilelement (7) entfernten Hälfte des Führungselements (12) befindet, am kleinsten ist.

5. Düsenanordnung nach einem der Ansprüche 1 bis 4, **dadurch gekennzeichnet, dass** das Ventilelement (7) und das Führungselement (12) lösbar miteinander in Kontakt stehen.

6. Düsenanordnung nach einem der Ansprüche 1 bis 5, **dadurch gekennzeichnet, dass** das Führungselement (12) an dem dem Ventilelement (7) benachbarten Ende einen Querschnitt aufweist, der kleiner oder gleich einem entsprechenden Querschnitt des Ventilelements (7) ist.

7. Düsenanordnung nach einem der Ansprüche 1 bis 6, **dadurch gekennzeichnet, dass** das Ventilelement (7) zumindest an einer dem Ventilsitz (6) zugewandten Seite eine symmetrisch gekrümmte Fläche (11) aufweist.

8. Düsenanordnung nach Anspruch 7, **dadurch gekennzeichnet, dass** das Ventilelement (7) zumindest in einem dem Ventilsitz (6) zugewandten Bereich eine sphärische Oberfläche (11) aufweist.

9. Düsenanordnung nach einem der Ansprüche 1 bis 8, **dadurch gekennzeichnet, dass** das Ventilelement (7) aus einem elastisch verformbaren Material besteht.

10. Düsenanordnung nach Anspruch 9, **dadurch gekennzeichnet, dass** der Ventilsitz (6) eine konische oder gekrümmte Form aufweist.

11. Düsenanordnung nach einem der Ansprüche 1 bis 10, **dadurch gekennzeichnet, dass** das Gehäuse (2, 3) ein erstes Gehäuseteil (2) und ein zweites Gehäuseteil (3) umfasst, wobei das zweite Gehäuseteil (3) ein Außengewinde (4) aufweist, das mit einem Innengewinde (5) in dem ersten Gehäuseteil (2) in Eingriff steht, wobei das zweite Gehäuseteil (3) einen mit dem Einlass verbundenen Einlasskanal (19) aufweist und der Ventilsitz (6) an einem inneren Ende des Einlasskanals (19) ausgebildet ist.

12. Düsenanordnung nach einem der Ansprüche 1 bis 11, **dadurch gekennzeichnet, dass** in dem Gehäuse (2, 3) zwischen dem Führungselement (12) und der Öffnung (9) ein Konuselement (15) angeordnet ist, wobei die Rückstellmittel (8) zwischen dem Konuselement (15) und dem Führungselement (12) angeordnet sind.

13. Düsenanordnung nach Anspruch 12, **dadurch gekennzeichnet, dass** die Rückstellmittel (8) in einer Aussparung (16) in dem Führungselement (12) und/oder in einer Aussparung in dem Konuselement (15) angeordnet sind.

14. Düsenanordnung nach einem der Ansprüche 1 bis 13, **dadurch gekennzeichnet, dass** die Rückstellmittel (8) in Form einer Feder aus Metall oder Kunststoff oder in Form eines Elastomerkörpers ausgebildet sind.

## Revendications

1. Agencement de buse d'atomisation (1) comprenant un boîtier (2, 3) ayant une entrée, un siège de soupape (6), un élément de soupape (7) interagissant avec le siège de soupape (6), des moyens de rappel (8) agissant sur l'élément de soupape (7), et un orifice (9), où l'élément de soupape (7) coopère avec un élément de guidage (12) qui est agencé dans un alésage du boîtier (2, 3), où une combinaison de l'élément de guidage (12) et de l'élément de soupape (7) comprend une surface ayant une transition en douceur dans une direction loin du siège de soupape (6),
**caractérisé en ce que** l'élément de guidage (12) comprend une section transversale augmentant dans une direction loin de l'élément de soupape (7).

2. Agencement de buse selon la revendication 1, **caractérisé en ce que** l'élément de guidage (12) est entouré d'un espace (21), l'espace (21) s'étendant entre une paroi interne (20) de l'alésage et l'élément de guidage (12) et ayant une section d'écoulement.

3. Agencement de buse selon la revendication 2, **caractérisé en ce que** la section d'écoulement entre l'élément de guidage (12) et la paroi interne (20) de l'alésage est la plus grande au niveau de l'extrémité de l'élément de guidage (12) adjacente à l'élément de soupape (7).

4. Agencement de buse selon la revendication 2 ou 3, **caractérisé en ce que** la section d'écoulement est la plus petite à une position qui est située dans la moitié de l'élément de guidage (12) éloignée de l'élément de soupape (7).

5. Agencement de buse selon l'une des revendications 1 à 4, **caractérisé en ce que** l'élément de soupape (7) et l'élément de guidage (12) entrent en contact l'un avec l'autre de manière séparable.

6. Agencement de buse selon l'une des revendications 1 à 5, **caractérisé en ce que** l'élément de guidage (12) a une section transversale au niveau de l'extrémité adjacente à l'élément de soupape (7) qui est inférieure ou égale à une section transversale correspondante de l'élément de soupape (7).

7. Agencement de buse selon l'une des revendications 1 à 6, **caractérisé en ce que** l'élément de soupape (7) comprend, au moins sur un côté faisant face au siège de soupape (6), une surface incurvée symétriquement (11).

8. Agencement de buse selon la revendication 7, **caractérisé en ce que** l'élément de soupape (7) comprend une surface sphérique (11), au moins dans une zone faisant face au siège de soupape (6).

9. Agencement de buse selon l'une des revendications 1 à 8, **caractérisé en ce que** l'élément de soupape (7) est réalisé en un matériau élastiquement déformable.

10. Agencement de buse selon la revendication 9, **caractérisé en ce que** le siège de soupape (6) comprend une forme conique ou incurvée.

11. Agencement de buse selon l'une des revendications 1 à 10, **caractérisé en ce que** le boîtier (2, 3) comprend une première partie de boîtier (2) et une seconde partie de boîtier (3), où la seconde partie de boîtier (3) comprend un filetage externe (4) en engagement avec un filetage interne (5) dans la première partie de boîtier (2), où la seconde partie de boîtier (3) comprend un canal d'entrée (19) relié à l'entrée et le siège de soupape (6) est formé au niveau d'une extrémité interne du canal d'entrée (19).

12. Agencement de buse selon l'une des revendications 1 à 11, **caractérisé en ce qu'**un élément de cône (15) est agencé dans le boîtier (2, 3) entre l'élément de guidage (12) et l'orifice (9), où les moyens de rappel (8) sont agencés entre l'élément de cône (15) et l'élément de guidage (12).

13. Agencement de buse selon la revendication 12, **caractérisé en ce que** les moyens de rappel (8) sont agencés dans un évidement (16) dans l'élément de guidage (12) et/ou dans un évidement dans l'élément de cône (15).

14. Agencement de buse selon l'une des revendications 1 à 13, **caractérisé en ce que** les moyens de rappel (8) se présentent sous la forme d'un ressort en métal ou en matière plastique ou sous la forme d'un corps élastomère.
